(19) Europäisches Patentamt
European Patent Office
Office européen des brevets

(11) Veröffentlichungsnummer: **0 029 974**
**A1**

# (12) EUROPÄISCHE PATENTANMELDUNG

(21) Anmeldenummer: **80107277.8**

(22) Anmeldetag: **21.11.80**

(51) Int. Cl.³: **C 07 C 143/72**
C 07 C 143/822, A 01 N 41/06

(30) Priorität: **30.11.79 DE 2948185**

(43) Veröffentlichungstag der Anmeldung:
**10.06.81 Patentblatt 81/23**

(84) Benannte Vertragsstaaten:
**AT BE CH DE FR GB IT LI NL SE**

(71) Anmelder: **Henkel Kommanditgesellschaft auf Aktien**
**-Patentabteilung- Postfach 1100 Henkelstrasse 67**
**D-4000 Düsseldorf 1(DE)**

(72) Erfinder: **Syldatk, Andreas, Dr.**
**Kolhagenstrasse 44**
**D-4000 Düsseldorf(DE)**

(72) Erfinder: **Stracke, Heinz-Ulrich, Dr.**
**Oskar-Erbslöh-Strasse 38a**
**D-4018 Langenfeld(DE)**

## (54) Neue Sulfonamide, ihre Herstellung und Verwendung als antimikrobielle Substanzen.

(57) Sulfonamide der Formel I

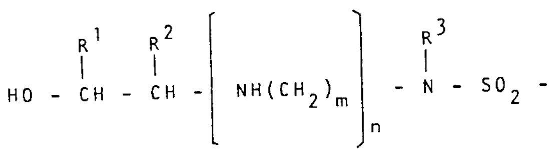

(I)

werden durch Umsetzung entsprechender Aminoalkanole der Formel II

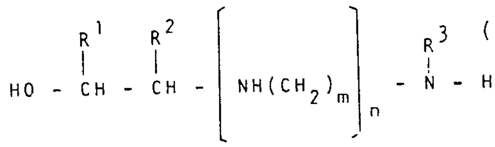

(II)

mit einem Sulfonsäurechlorid der Formel $R^4$-$SO_2Cl$ im Molverhältnis 1:1 bis 1:1,3 erhalten, wobei die bei der Reaktion entstehende Salzsäure neutralisiert wird.
$R^1$ = Alkyl-($C_{1-18}$); $R^2$ = H oder Alkyl-($C_{1-17}$) Summe der C-Atome in $R^1$+$R^2$ = 8-18; $R^3$ = H, Alkyl-($C_{1-3}$), Hydroxyalkyl- ($C_{2\ oder\ 3}$), 2-(Dimethylamino)-ethyl- oder 3-(Dimethylamino)-propyl-, $R^4$ = Alkyl-($C_{1-3}$), Phenyl- oder p-Tolyl-; m = 2-6; n = 0 oder 1.

Die neuen Sulfonamide werden als antimikrobielle Wirkstoffe verwendet.

EP 0 029 974 A1

HENKEL KGaA
ZR-FE/Patente
Dr. Gla/B

P a t e n t a n m e l d u n g

D 6107 EP

# "Neue Sulfonamide, ihre Herstellung und Verwendung als antimikrobielle Substanzen"

Die Erfindung betrifft neue Sulfonamide der Formel I,

$$HO - \overset{\displaystyle R^1}{\overset{|}{CH}} - \overset{\displaystyle R^2}{\overset{|}{CH}} - \left[ NH(CH_2)_m \right]_n - \overset{\displaystyle R^3}{\overset{|}{N}} - SO_2 - R^4 \qquad \text{I}$$

in der $R^1$ einen Alkylrest mit 1 bis 18 Kohlenstoffatomen und $R^2$ Wasserstoff oder einen Alkylrest mit 1 bis 17 Kohlenstoffatomen

bedeutet, wobei die Summe der in $R^1$ und $R^2$ vorhandenen Kohlenstoffatome 8 bis 18 beträgt, $R^3$ Wasserstoff, einen Alkylrest mit 1 bis 3 Kohlenstoffatomen, einen Hydroxyalkylrest mit 2 oder 3 Kohlenstoffatomen, einen 2-(Dimethylamino)-ethylrest oder einen 3-(Dimethylamino)-propylrest und $R^4$ einen Alkylrest mit 1 bis 3 Kohlenstoffatomen, einen Phenylrest oder einen p-Tolylrest darstellen, während m eine ganze Zahl von 2 bis 6 ist und n die Werte 0 und 1 darstellen kann.

Die Erfindung betrifft weiterhin ein Verfahren zur Herstellung von Sulfonamiden der Formel I, bei dem man Aminoalkanole der Formel II,

$$HO - \overset{\displaystyle R^1}{\overset{|}{CH}} - \overset{\displaystyle R^2}{\overset{|}{CH}} - \left[ NH(CH_2)_m \right]_n - \overset{\displaystyle R^3}{\overset{|}{N}} - H \qquad \text{II}$$

in der $R^1$, $R^2$, $R^3$, m und n die für die Formel I angegebene Bedeutung haben, mit einem Sulfonsäurechlorid der

Formel III,

$$R^4 - SO_2Cl \qquad III$$

in der $R^4$ die für die Formel I angegebene Bedeutung hat, im Molverhältnis 1 : 1 bis 1 : 1,3 umsetzt und die bei der Reaktion entstehende Salzsäure mit einer Base neutralisiert.

Die Erfindung betrifft schließlich die Verwendung der Verbindungen der Formel I als antimikrobielle Substanzen.

Die Aminoalkanole der Formel II können beispielsweise analog zu dem in der deutschen Patentanmeldung P 25 20 267.9 angegebenen Verfahren aus Epoxyalkanen der Formel IV

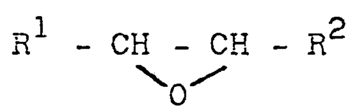

IV

und Ammoniak oder Aminverbindungen der Formel V

$$H - \left[NH(CH_2)_m\right]_n - \overset{\overset{R^4}{|}}{N} - H \qquad V$$

hergestellt werden. Dabei sind als Ausgangsmaterial 1,2-Epoxyalkane mit 10 bis 20 Kohlenstoffatomen sowie alle Epoxyalkane mit innenständiger Epoxygruppierung und 10 bis 20 Kohlenstoffatomen geeignet. Die Kohlenstoffketten dieser Epoxyalkane sind vorzugsweise unverzweigt. Bevorzugt werden Gemische von Verbindungen unterschied-

/3

licher Kettenlänge. Bei den Epoxyalkanen mit innenständiger Epoxygruppierung werden bevorzugt Gemische von Verbindungen mit isomerer Stellung der Epoxygruppierung eingesetzt.

Die Epoxyalkane der Formel IV sind im übrigen in bekannter Weise durch Epoxydierung entsprechender Olefine zugänglich. Olefine mit endständigen Doppelbindungen können beispielsweise durch Kracken von Paraffinkohlenwasserstoffen nach geeigneten Verfahren oder auf aluminochemischem Wege in guten Ausbeuten und hohen Konzentrationen erhalten werden. Olefine bzw. Olefingemische mit innenständigen Doppelbindungen sind zum Beispiel über katalytische Dehydrierung oder Chlorierung/Dehydrochlorierung von linearen Paraffinen des genannten Kettenlängenbereichs und folgende selektive Extraktion der Monoolefine mit innenständiger Doppelbindung zugänglich.

Als Amine der Formel V kommen primäre Amine wie Methylamin, Ethylamin, n-Propylamin und i-Propylamin, Alkylendiamine wie Ethylendiamin, Propylendiamin, Tetramethylendiamin und Hexamethylendiamin, sowie N-substituierte Alkylendiamine wie N-Methylethylendiamin, N-Ethylethylendiamin, N-Hydroxyethylethylendiamin, N-Methylpropylendiamin, N,N-Dimethylpropylendiamin, N-n-Propylpropylendiamin, N-Ethyltetramethylendiamin, N-i-Propylpentamethylendiamin und Ethylhexamethylendiamin in Betracht.

Die Aminoalkanole der Formel II fallen bei der Herstellung in der Regel als freie Stickstoffbasen an und

lassen sich ohne weiteres als Ausgangsmaterial für die Herstellung der erfindungsgemäßen Sulfonamide verwenden.

Als Sulfonsäurechloride der Formel III werden die Chloride der Methansulfonsäure, Ethansulfonsäure, Propansulfonsäure, Benzolsulfonsäure und p-Toluolsulfonsäure eingesetzt.

Die Umsetzung der Aminoalkanole der Formel II mit den Sulfonsäurechloriden der Formel III wird zweckmäßigerweise in einem polaren Lösungsmittel durchgeführt, z.B. in Methanol, Ethanol oder Isopropanol. Die Reaktion wird im allgemeinen mit stöchiometrischen Mengen Aminoalkanol, Sulfonsäurechlorid und Base durchgeführt. Man kann aber auch mit einem Überschuß an Sulfonsäurechlorid und einer dazu stöchiometrischen Menge Base arbeiten, wenn dies zur vollständigen Umsetzung des Amins erforderlich erscheint. Sulfonsäurechlorid und Base werden in diesem Fall gegenüber dem Aminoalkanol in einem Überschuß bis zu 30 Mol-% eingesetzt. Als Basen kommen vor allem die Carbonate, Bicarbonate und insbesondere die Hydroxide des Natriums und Kaliums in Betracht. Die Basen werden dem Reaktionsgemisch in der Regel als wässrige, relativ konzentrierte Lösungen zugegeben.

Bei der praktischen Durchführung des erfindungsgemäßen Herstellungsverfahrens ist es zweckmäßig, die gesamte Aminoalkanollösung vorzulegen und die vorgesehenen Mengen Sulfonsäurechlorid und Base unter Rühren langsam zuzugeben. Dabei können Sulfonsäurechlorid und

/5

Base gleichzeitig mit etwa der gleichen Geschwindigkeit eingetragen werden. Es ist jedoch auch möglich, das Säurechlorid und die Base abwechselnd in aliquoten Anteilen zuzugeben.

Die Reaktion verläuft spontan und exotherm. Es ist deshalb angezeigt, die entstehende Reaktionswärme durch entsprechende Kühlung des Reaktionsgemisches abzuführen.

Nach beendeter Umsetzung werden die im Reaktionsgemisch vorhandenen Lösungsmittel abdestilliert, vorzugsweise unter vermindertem Druck. Die zurückbleibenden Produkte stellen zumeist zähe Flüssigkeiten, in einzelnen Fällen kristallisierende Festkörper dar. In der Regel können diese Substanzen ohne weitere Aufbereitung ihrer Verwendung als antimikrobielle Mittel zugeführt werden. Sie zeichnen sich vor allem dadurch aus, daß sie in Wasser sehr gut löslich sind. Gleichzeitig besitzen die erfindungsgemäßen Stoffe eine zufriedenstellende bis sehr gute Löslichkeit in organischen Lösungsmitteln. Ferner sind sie über einen weiten pH-Bereich stabil.

Zur Verwendung in antimikrobiellen Mitteln können die Substanzen in flüssige, pastenförmige oder feste Zubereitungen eingearbeitet werden, wie z.B. wässrige Lösungen, Suspensionen, Emulsionen und Lösungen in organischen Lösungsmitteln. Derartige antibakterielle Mittel können auf den verschiedensten Gebieten zum Einsatz gelangen, wie z.B. als Reinigungs-, Desinfektions- und Konservierungsmittel für Textilien, Fußböden, medizinische Instrumente, Krankenhauseinrichtungen,

gewerbliche Betriebe, wie Molkereien, Brauereien und Wäschereien. Außerdem eignen sie sich zur Konservierung von technischen Produkten, die zu bakteriellem Befall und bakterieller Zersetzung neigen. Auf Grund ihrer guten physiologischen Verträglichkeit lassen sich die erfindungsgemäßen Substanzen mit Vorteil in Präparaten zur Körperpflege einsetzen, beispielsweise in Seifen, Shampoos und anderen Körperreinigungsmitteln, Deodorantien und sonstigen kosmetischen Präparaten zur Haut- und Körperpflege, die von Bakterien befallen werden können, wie Hautcremes, Lotionen, Schminken und Puder. In den antibakteriellen Mitteln werden die erfindungsgemäßen Substanzen in Mengen von 0,1 bis 10 Gew.-%, vorzugsweise 0,5 bis 5 Gew.-%, bezogen auf die gesamte antimikrobielle Zusammensetzung, eingesetzt. In Präparaten, die gegen Bakterien konserviert werden sollen, kommen die erfindungsgemäßen Substanzen in Mengen von 0,1 bis 2 Gew.-%, bezogen auf die Gesamtmenge des zu konservierenden Produktes, zur Anwendung.

In Präparationen, in denen ein Zusatz von Komplexbildnern angebracht ist, können die erfindungsgemäßen Sulfonamide der Formel I auch mit Komplexbildnern kombiniert werden, die im Hampshire-Test ein größeres Calciumcarbonat-Bindevermögen als 230 mg je g Komplexbildner aufweisen. Hierdurch ist gegebenenfalls eine weitere Wirkungssteigerung möglich.

Die erfindungsgemäßen Substanzen zeichnen sich durch eine sehr gute bakteriostatische und bakterizide Wirksamkeit aus, die ihren Einsatz besonders auf solchen Gebieten gestattet, bei denen es nicht nur auf die

/7

Hemmung des bakteriellen Wachstums, sondern auf eine Abtötung der Bakterien in technisch annehmbaren Zeiträumen unter Verwendung niederer Konzentrationen ankommt.

Die nachfolgenden Beispiele sollen den Gegenstand der Erfindung näher erläutern, ohne ihn jedoch hierauf zu beschränken.

## Beispiele

### I. Herstellung der Sulfonamide der Formel I

#### Beispiel 1

Als Aminausgangsmaterial diente ein N,N-Dimethyl-N'-(2-hydroxyalkyl)-amin der Formel

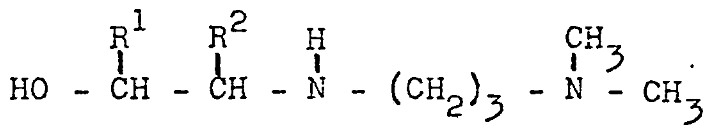

in der $R^1$ und $R^2$ geradkettige Alkylreste mit 1 bis 15 Kohlenstoffatomen darstellen und die Summe der Kohlenstoffatome in $R^1$ und $R^2$ 13 bis 16 beträgt. Zu einer Lösung von 3,03 kg (9 Mol) dieses Diamins wurden unter Rühren im Verlauf von 2 Stunden aus 2 Tropftrichtern gleichzeitig 1,01 kg (9 Mol) Methansulfochlorid und eine Lösung von 360 g (9 Mol) Natriumhydroxid in 400 ml Wasser zugetropft. Die Temperatur der Reaktionsmischung wurde dabei durch Eiskühlung bei 5 - 10°C gehalten. Nach dem Ende der Zugabe wurde das Gemisch 3 Stunden bei Raumtemperatur weitergerührt. Anschließend wurde das ausgefallene Natriumchlorid abfiltriert. Aus dem Filtrat wurde das Lösungsmittel abdestilliert. Es verblieben 3,7 kg rotbraunes Öl, Wassergehalt 3,8 Gew.-%.

#### Beispiel 2

Als Ausgangsmaterial diente ein N-(2-Hydroxyalkyl)propylendiamin der Formel

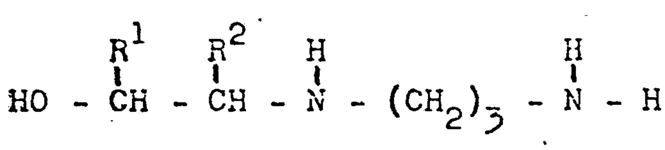

/9

in der $R^1$ und $R^2$ geradkettige Alkylreste mit 1 bis 11 Kohlenstoffatomen darstellen und die Summe der Kohlenstoffatome in $R^1$ und $R^2$ 9 bis 12 beträgt. Zu einer Lösung von 667 g (2,5 Mol) dieses Diamins wurde unter Rühren zunächst die erste Hälfte von 529 g (3 Mol) Benzolsulfochlorid zugetropft, wobei die Temperatur der Reaktionsmischung durch Eiskühlung bei 25 - 30°C gehalten wurde. Danach wurde die erste Hälfte einer Lösung von 120 g (3 Mol) Natriumhydroxid in 200 ml Wasser langsam zugegeben. Durch Zugabe der zweiten Hälfte des Benzolsulfochlorid und der restlichen Natronlauge wurde die Reaktion schließlich zu Ende geführt. Das ausgefallene Natriumchlorid wurde abfiltriert. Aus dem Filtrat wurde Alkohol und Wasser weitgehend abdestilliert. Der Rückstand wurde in 5 l Ether gelöst. Die Etherlösung wurde mit dem gleichen Volumen Wasser gewaschen und danach mit Natriumsulfat getrocknet. Nach dem Abdestillieren des Ethers verblieben 1068 g gelbes Öl, das beim Stehenlassen kristallisierte.

Beispiel 3

In Analogie zu den Beispielen 1 und 2 wurde eine Reihe von weiteren Sulfonamiden der Formel I

$$HO - \underset{}{\overset{R^1}{\overset{|}{CH}}} - \overset{R^2}{\overset{|}{CH}} - \left[ NH(CH_2)_m \right]_n - \overset{R^3}{\overset{|}{N}} - SO_2 - R^4 \qquad I$$

aus entsprechenden Aminoalkanolen hergestellt. Alle erhaltenen Substanzen sind in der Tabelle I wiedergegeben. Die gemäß Beispiel 1 und 2 erhaltenen Substanzen sind unter der Bezeichnung A 19 und B 7 in der Tabelle enthalten.

Tabelle I

| Substanz | $R^1$ | $R^2$ | m | n | $R^3$ | $R^4$ | Fp°C | $n_D^{20}$ | $n_D^{40}$ |
|---|---|---|---|---|---|---|---|---|---|
| A 1 | $C_{10-12}$-Alkyl | H | - | 0 | H | $CH_3$ | 68-71 | - | - |
| A 2 | $C_{10-12}$-Alkyl | H | 2 | 1 | H | $CH_3$ | grünliches Harz | | |
| A 3 | $C_{10-12}$-Alkyl | H | 3 | 1 | $CH_3$ | $CH_3$ | gelbes Wachs | | |
| A 4 | $C_{10-12}$-Alkyl | H | 3 | 1 | $(CH_3)_2N(CH_2)_3$ | $CH_3$ | - | 1,4812 | - |
| A 5 | $C_{12-14}$-Alkyl | H | 2 | 1 | H | $CH_3$ | braunes Wachs | | |
| A 6 | $C_{12-14}$-Alkyl | H | 2 | 1 | H | $CH_3$ | bräunliches Wachs | | |
| A 7 | $C_{12-14}$-Alkyl | H | 3 | 1 | H | $CH_3$ | schwach gelbes Harz | | |
| A 8 | $C_{12-14}$-Alkyl | H | 3 | 1 | $(CH_3)_2N(CH_2)_3$ | $CH_3$ | gelbbraunes Harz | | |
| A 9 | $R^1 + R^2 = C_{9-12}$-Alkyl | | 2 | 1 | H | $CH_3$ | - | 1,4712 | - |
| A 10 | $R^1 + R^2 = C_{9-12}$-Alkyl | | 3 | 1 | H | $CH_3$ | - | 1,4566 | - |

/11

Fortsetzung Tabelle I

| Substanz | $R^1$ | $R^2$ | m | n | $R^3$ | $R^4$ | $Fp^0C$ | $n_D^{20}$ | $n_D^{40}$ |
|---|---|---|---|---|---|---|---|---|---|
| A 11 | $R^1 + R^2 = C_{9-12}$-Alkyl | | 6 | 1 | $CH_3$ | $CH_3$ | gelbes Wachs | | |
| A 12 | $R^1 + R^2 = C_{9-12}$-Alkyl | | 3 | 1 | $(CH_3)_2N(CH_2)_3$ | $CH_3$ | - | 1,5005 | - |
| A 13 | $R^1 + R^2 = C_{9-12}$-Alkyl | | - | 0 | $HOC_2H_4$ | $CH_3$ | - | - | 1,4778 |
| A 14 | $R^1 + R^2 = C_{13-16}$-Alkyl | | - | 0 | $CH_3$ | $CH_3$ | - | - | 1,4682 |
| A 15 | $R^1 + R^2 = C_{13-16}$-Alkyl | | - | 0 | $CH_3$ | $CH_3$ | - | - | 1,4659 |
| A 16 | $R^1 + R^2 = C_{13-16}$-Alkyl | | 2 | 1 | H | $CH_3$ | - | - | 1,4778 |
| A 17 | $R^1 + R^2 = C_{13-16}$-Alkyl | | 3 | 1 | H | $CH_3$ | gelbbraunes Harz | | |
| A 18 | $R^1 + R^2 = C_{13-16}$-Alkyl | | 2 | 1 | H | $CH_3$ | gelbes Wachs | | |
| A 19 | $R^1 + R^2 = C_{13-16}$-Alkyl | | 3 | 1 | H | $CH_3$ | - | 1,4756 | - |
| B 1 | $C_{10-12}$-Alkyl | H | 2 | 1 | H | $C_6H_5$ | gelblich-bräunliches Harz | | |
| B 2 | $C_{10-12}$-Alkyl | H | 3 | 1 | H | $C_6H_5$ | bräunliches Wachs | | |
| B 3 | $C_{10-12}$-Alkyl | H | 3 | 1 | $(CH_3)_2N(CH_2)_3$ | $C_6H_5$ | - | 1,5027 | - |

/12

Fortsetzung Tabelle I

| Substanz | $R^1$ | $R^2$ | m | n | $R^3$ | $R^4$ | Fp°C | $n_D^{20}$ | $n_D^{40}$ |
|---|---|---|---|---|---|---|---|---|---|
| B 4 | $C_{12-14}$-Alkyl | H | 2 | 1 | H | $C_6H_5$ | gelbliches Wachs | | |
| B 5 | $C_{12-14}$-Alkyl | H | 3 | 1 | H | $C_6H_5$ | 120-130 | - | - |
| B 6 | $R^1 + R^2 = C_{9-12}$-Alkyl | | 2 | 1 | H | $C_6H_5$ | - | 1,4988 | - |
| B 7 | $R^1 + R^2 = C_{9-12}$-Alkyl | | 3 | 1 | H | $C_6H_5$ | - | - | 1,4992 |
| B 8 | $R^1 + R^2 = C_{9-12}$-Alkyl | | 6 | 1 | H | $C_6H_5$ | - | 1,5138 | - |
| B 9 | $R^1 + R^2 = C_{9-12}$-Alkyl | | 3 | 1 | $(CH_3)_2N(CH_2)_3$ | $C_6H_5$ | - | 1,5015 | - |
| B 10 | $R^1 + R^2 = C_{9-12}$-Alkyl | | - | 0 | $HOC_2H_4$ | $C_6H_5$ | - | - | 1,5028 |
| B 11 | $R^1 + R^2 = C_{13-16}$-Alkyl | | - | 0 | $C_2H_5$ | $C_6H_5$ | - | 1,4981 | - |
| B 12 | $R^1 + R^2 = C_{13-16}$-Alkyl | | 2 | 1 | H | $C_6H_5$ | - | - | 1,4950 |
| B 13 | $R^1 + R^2 = C_{13-16}$-Alkyl | | 3 | 1 | H | $C_6H_5$ | - | - | 1,5040 |
| B 14 | $R^1 + R^2 = C_{13-16}$-Alkyl | | 3 | 1 | $(CH_3)_2N(CH_2)_3$ | $C_6H_5$ | - | 1,4922 | - |
| C 1 | $C_{10-12}$-Alkyl | H | 2 | 1 | H | p-$CH_3$-$C_6H_4$ | 76-84 | - | - |
| C 2 | $C_{10-12}$-Alkyl | H | 3 | 1 | H | p-$CH_3$-$C_6H_4$ | 132-139 | - | - |

/13

Fortsetzung Tabelle I

| Substanz | $R^1$ | $R^2$ | m | n | $R^3$ | $R^4$ | Fp°C | $n_D^{20}$ | $n_D^{40}$ |
|---|---|---|---|---|---|---|---|---|---|
| C 3 | $C_{10-12}$-Alkyl | H | 3 | 1 | $(CH_3)_2N(CH_2)_3$ | p-$CH_3$-$C_6H_4$ | - | 1,5015 | - |
| C 4 | $C_{12-14}$-Alkyl | H | 2 | 1 | H | p-$CH_3$-$C_6H_4$ | 71-82 | - | - |
| C 5 | $C_{12-14}$-Alkyl | H | 3 | 1 | H | p-$CH_3$-$C_6H_4$ | 121-123 | - | - |
| C 6 | $C_{14-16}$-Alkyl | H | 3 | 1 | H | p-$CH_3$-$C_6H_4$ | 195-203 | - | - |
| C 7 | $C_{14-16}$-Alkyl | H | 3 | 1 | $(CH_3)_2N(CH_2)_3$ | p-$CH_3$-$C_6H_4$ | gelbes Harz | | |
| C 8 | $R^1 + R^2 = C_{9-12}$-Alkyl | | 2 | 1 | H | p-$CH_3$-$C_6H_4$ | bräunliches Harz | | |
| C 9 | $R^1 + R^2 = C_{9-12}$-Alkyl | | 3 | 1 | H | p-$CH_3$-$C_6H_4$ | - | - | 1,5016 |
| C 10 | $R^1 + R^2 = C_{9-12}$-Alkyl | | 3 | 1 | $(CH_3)_2N(CH_2)_3$ | p-$CH_3$-$C_6H_4$ | - | 1,5005 | - |
| C 11 | $R^1 + R^2 = C_{13-16}$-Alkyl | | - | 0 | $C_2H_5$ | p-$Ch_3$-$C_6H_4$ | - | 1,5045 | - |
| C 12 | $R^1 + R^2 = C_{13-16}$-Alkyl | | 2 | 1 | H | p-$CH_3$-$C_6H_4$ | - | - | 1,4980 |
| C 13 | $R^1 + {}^2 = C_{13-16}$-Alkyl | | 3 | 1 | H | p-$CH_3$-$C_6H_4$ | - | - | 1,4998 |
| C 14 | $R^1 + R^2 = C_{13-16}$-Alkyl | | 3 | 1 | $(CH_3)_2N(CH_2)_3$ | p-$CH_3$-$C_6H_4$ | - | 1,4926 | - |

## II. Antimikrobielle Wirksamkeit der Sulfonamide der Formel I

### Beispiel 4

Die mikrobistatische Wirksamkeit der Substanzen A 1 bis A 19, B 1 bis B 14 und C 1 bis C 14 aus den Beispielen 1 bis 3 wurde gegenüber folgenden Testkeimsuspensionen bestimmt:

| | | |
|---|---|---|
| 1) Staphylococcus aureus | $5 \times 10^7$ | Keime/ml |
| 2) Escherichia coli | $5 \times 10^7$ | Keime/ml |
| 3) Pseudomonas aeruginosa | $5 \times 10^7$ | Keime/ml |
| 4) Candida albicans | $5 \times 10^7$ | Keime/ml |

Die Hemmkonzentrationen der zu untersuchenden Produkte wurden mit Hilfe des Verdünnungstests nach den Richtlinien für die Prüfung chemischer Desinfektionsmittel der deutschen Gesellschaft für Hygiene und Mikrobiologie (1959) ermittelt. Die Versuche wurden in sterilen Reagenzröhrchen ausgeführt, die Standard-I-Bouillon (Merck) oder Bierwürze (8°BG) enthielten. Nach Zugabe der Wirkstoffe betrug das Nährlösungsvolumen in den Röhrchen jeweils 10 ml. Anschließend wurde jeweils 0,1 ml Testkeimsuspension der angegebenen Konzentration in die Röhrchen gebracht. Die mit Bakterien geimpften Nährlösungsproben wurden 3 Tage lang bei 37°C im Brutschrank aufbewahrt. Die mit Candida albicans geimpften Proben wurden 3 Tage lang bei 30°C bebrütet. Danach wurde festgestellt, welche dem Nährmedium zugefügte Wirkstoffkonzentration das Wachstum der Keime gerade noch gehemmt hatte. Der auf diese Weise gefundene Wert

wurde als Hemmkonzentration bezeichnet. Folgende Wirkstoffkonzentrationen in ppm wurden getestet:

1 000, 750, 500, 250, 100, 50, 10.

Die für die Substanzen A 1 bis A 19, B 1 bis B 14 und C 1 bis C 14 wurden die in der nachstehenden Tabelle II aufgeführten Hemmkonzentrationen ermittelt.

Tabelle II

Hemmkonzentrationen der Produkte A 1 - A 19, B 1 - B 14 und C 1 - C 14 in ppm

| Substanz | Testkeim | | | |
|---|---|---|---|---|
| | 1 | 2 | 3 | 4 |
| A 1 | < 10 | 50 | 500 | 100 |
| A 2 | < 10 | 50 | 50 | 100 |
| A 3 | < 10 | 50 | 250 | 250 |
| A 4 | < 10 | 50 | 250 | 100 |
| A 5 | < 10 | 50 | 50 | 100 |
| A 6 | < 10 | 250 | 250 | 250 |
| A 7 | < 10 | 50 | 50 | 50 |
| A 8 | < 10 | 250 | > 1000 | 50 |
| A 9 | 50 | 100 | 500 | 250 |
| A 10 | < 10 | 50 | 50 | 250 |
| A 11 | < 10 | 100 | > 1000 | 250 |
| A 12 | 50 | 50 | 250 | 1000 |
| A 13 | < 10 | 100 | 1000 | 250 |
| A 14 | 5 | 5 | 250 | 100 |
| A 15 | < 10 | 50 | 250 | 100 |

Fortsetzung Tabelle II

| Substanz | Testkeim | | | |
|---|---|---|---|---|
| | 1 | 2 | 3 | 4 |
| A 16 | < 10 | 50 | 100 | 100 |
| A 17 | 5 | 10 | 100 | 100 |
| A 18 | < 10 | 250 | 1000 | 50 |
| A 19 | 1 | 5 | 50 | 50 |
| B 1 | 5 | 100 | 250 | 250 |
| B 2 | < 10 | 50 | 100 | 100 |
| B 3 | < 10 | 500 | 1000 | 100 |
| B 4 | < 10 | 100 | 250 | 250 |
| B 5 | < 10 | 100 | 100 | 100 |
| B 6 | 5 | 500 | 1000 | 250 |
| B 7 | < 10 | 50 | 1000 | 100 |
| B 8 | < 10 | > 1000 | > 1000 | 250 |
| B 9 | < 10 | 100 | 1000 | 100 |
| B 10 | < 10 | 500 | > 1000 | 250 |
| B 11 | < 10 | 100 | > 1000 | 500 |
| B 12 | < 10 | 100 | 500 | 50 |
| B 13 | < 10 | 50 | 100 | 50 |
| B 14 | < 10 | 50 | 100 | 50 |
| C 1 | < 10 | 50 | 100 | 100 |
| C 2 | < 10 | < 10 | 50 | 50 |
| C 3 | < 10 | 250 | > 1000 | 50 |
| C 4 | 50 | 250 | 250 | 250 |
| C 5 | < 10 | < 10 | < 10 | 50 |
| C 6 | 50 | 100 | 250 | 250 |
| C 7 | < 10 | 1000 | > 1000 | 50 |
| C 8 | 5 | 1000 | 1000 | 100 |
| C 9 | < 10 | 50 | 1000 | 100 |
| C 10 | < 10 | 100 | 1000 | 100 |
| C 11 | 50 | 250 | > 1000 | 500 |

Fortsetzung Tabelle II

| Substanz | Testkeim | | | |
|---|---|---|---|---|
| | 1 | 2 | 3 | 4 |
| C 12 | 5 | 250 | 500 | 50 |
| C 13 | < 10 | 50 | 250 | 50 |
| C 14 | 10 | 10 | 100 | 100 |

Beispiel 5

Die mikrobizide Wirkung der in der Tabelle III aufgeführten Substanzen wurde gegenüber folgenden Testkeimsuspensionen bestimmt:

1) Staphylococcus aureus $2 \times 10^8$ Keime/ml
2) Escherichia coli $3 \times 10^8$ Keime/ml
3) Pseudomonas aeruginosa $2 \times 10^8$ Keime/ml
4) Candida albicans $8 \times 10^7$ Keime/ml

Die Abtötungszeiten der zu untersuchenden Produkte wurden mit Hilfe des Suspensionstests nach den Richtlinien für die Prüfung chemischer Desinfektionsmittel der deutschen Gesellschaft für Hygiene und Mikrobiologie (1959) ermittelt.

Die zu prüfenden Substanzen wurden zunächst in wenig Alkohol gelöst. Aus den ethanolischen Lösungen wurden durch Verdünnen mit entionisiertem Wasser Testlösungen hergestellt, die 500 ppm, 250 ppm und 100 ppm Wirkstoff und maximal 1 Gew.-% Ethanol enthielten.

Den Richtlinien entsprechend wurden bei Raumtemperatur jeweils 0,1 ml Testkeimsuspension in Reagenzgläser pipettiert. Hierzu wurden jeweils 10 ml der oben beschriebenen Testlösungen gegeben. Nach Einwirkungszeiten von 2 1/2, 5, 10, 20, 40, 60 und 120 Minuten wurde den Reagenzgläsern mit Hilfe einer Öse ein Tropfen Material entnommen und in 10 ml Nährlösung, die 3% Tween 80 und 0,3% Lecithin als Enthemmer enthielt, überimpft. Das Nährmedium bestand bei den Bakterien aus 1 gew.-%iger Standard-I-Bouillon (Merck), bei Candida albicans aus 1 gew.-%iger Bierwürzelösung. Die mit Bakterien beimpften Proben wurden bei 37°C, die mit Candida albicans beimpften Proben bei 30°C bebrütet. Nach frühestens 5 Tagen wurden die Kulturen makroskopisch auf Wachstum beurteilt und auf diesem Weg die Abtötungszeiten ermittelt, die in der nachstehenden Tabelle III wiedergegeben sind.

Tabelle III

Abtötungszeiten bei Konzentrationen von 500, 250 und 100 ppm in Minuten

| Substanz | ppm | Testkeim | | | | pH |
|---|---|---|---|---|---|---|
| | | 1 | 2 | 3 | 4 | |
| A 1 | 500 | 10 | 2,5 | 10 | 20 | 5,0 |
| | 250 | 20 | 5 | - | 20 | |
| | 100 | 40 | 20 | - | 60 | |

Fortsetzung Tabelle III

| Substanz | ppm | Testkeim 1 | 2 | 3 | 4 | pH |
|---|---|---|---|---|---|---|
| A 2 | 500 | 10 | 5 | 5 | 60 | 5,6 |
| | 250 | 10 | 20 | 20 | 60 | |
| | 100 | 10 | 20 | 40 | 60 | |
| A 3 | 500 | 5 | 20 | 20 | 20 | 8,57 |
| | 250 | 10 | 60 | - | - | |
| | 100 | 20 | - | - | - | |
| A 4 | 500 | - | 5 | 10 | 5 | 8,46 |
| | 250 | 5 | 10 | 20 | 20 | |
| | 100 | 10 | 40 | - | 120 | |
| A 5 | 500 | 10 | 20 | 40 | 40 | 5,2 |
| | 250 | 20 | 40 | 40 | 40 | |
| | 100 | 20 | 40 | 60 | 40 | |
| A 7 | 500 | 2,5 | 10 | 10 | 20 | 7,6 |
| | 250 | 5 | 10 | 10 | 20 | |
| | 100 | 20 | 10 | 60 | 20 | |
| A 9 | 500 | 2,5 | 2,5 | 2,5 | 10 | 5,25 |
| | 250 | 2,5 | 10 | 5 | 40 | |
| | 100 | 40 | >120 | - | >120 | |
| A 10 | 500 | 2,5 | 2,5 | 2,5 | 20 | 10,05 |
| | 250 | 5 | 2,5 | 5 | 60 | |
| | 100 | 10 | 120 | 20 | 120 | |
| A 12 | 500 | 20 | 60 | 120 | 40 | 7,6 |
| | 250 | 20 | 60 | 120 | 60 | |
| | 100 | 40 | >120 | >120 | >120 | |

Fortsetzung Tabelle III

| Substanz | ppm | Testkeim | | | | pH |
|---|---|---|---|---|---|---|
| | | 1 | 2 | 3 | 4 | |
| A 14 | 500<br>250<br>100 | 2,5<br>5<br>5 | 2,5<br>2,5<br>2,5 | 2,5<br>20<br>20 | 40<br>60<br>60 | 5,0 |
| A 15 | 500<br>250<br>100 | 2,5<br>10<br>20 | 2,5<br>2,5<br>5 | 2,5<br>2,5<br>10 | 40<br>40<br>40 | 5,9 |
| A 16 | 500<br>250<br>100 | 2,5<br>2,5<br>5 | 2,5<br>2,5<br>5 | 2,5<br>5<br>5 | 40<br>40<br>60 | 5,3 |
| A 17 | 500<br>250<br>100 | 2,5<br>2,5<br>5 | 2,5<br>2,5<br>5 | 2,5<br>2,5<br>5 | 40<br>40<br>120 | 6,7 |
| A 19 | 500<br>250<br>100 | 2,5<br>2,5<br>5 | 2,5<br>2,5<br>5 | 2,5<br>2,5<br>5 | 2,5<br>5<br>20 | 8,3 |
| B 2 | 500<br>250<br>100 | 2,5<br>2,5<br>10 | 5<br>10<br>10 | 5<br>20<br>20 | 20<br>40<br>60 | 5,9 |
| B 4 | 500<br>250<br>100 | 20<br>20<br>20 | 20<br>20<br>20 | 40<br>40<br>40 | 20<br>40<br>40 | 5,7 |
| B 5 | 500<br>250<br>100 | 5<br>5<br>20 | 10<br>20<br>20 | 40<br>60<br>60 | 20<br>20<br>120 | 5,3 |

Fortsetzung Tabelle III

| Substanz | ppm | Testkeim 1 | 2 | 3 | 4 | pH |
|---|---|---|---|---|---|---|
| B 7 | 500 | 10 | 5 | 20 | 60 | 4,0 |
| | 250 | 20 | 5 | - | 60 | |
| | 100 | 40 | >120 | - | >120 | |
| B 12 | 500 | 2,5 | 2,5 | 5 | 60 | 4,45 |
| | 250 | 5 | 10 | 20 | 60 | |
| | 100 | 5 | 10 | - | >120 | |
| B 13 | 500 | 2,5 | 2,5 | 2,5 | 20 | 5,0 |
| | 250 | 2,5 | 2,5 | 5 | 20 | |
| | 100 | 5 | 10 | 40 | 40 | |
| B 14 | 500 | 5 | 5 | 5 | 20 | 8,0 |
| | 250 | 10 | 10 | 10 | 60 | |
| | 100 | 10 | 20 | 60 | 60 | |
| C 1 | 500 | 5 | 10 | 40 | 60 | 6,6 |
| | 250 | 10 | 10 | 40 | 120 | |
| | 100 | 20 | 20 | 120 | >120 | |
| C 2 | 500 | 2,5 | 10 | 10 | 10 | 5,9 |
| | 250 | 5 | 10 | 20 | 10 | |
| | 100 | 5 | 120 | >120 | 10 | |
| C 5 | 500 | 5 | 20 | 2,5 | 40 | 4,7 |
| | 250 | 10 | 120 | 2,5 | 60 | |
| | 100 | 20 | 120 | 60 | 60 | |
| C 9 | 500 | 5 | 5 | 10 | 40 | 4,0 |
| | 250 | 10 | 20 | - | 40 | |
| | 100 | 20 | 120 | - | 40 | |

Fortsetzung Tabelle III

| Substanz | ppm | Testkeim | | | | pH |
|---|---|---|---|---|---|---|
| | | 1 | 2 | 3 | 4 | |
| C 13 | 500 | 2,5 | 5 | 5 | 5 | 4,7 |
| | 250 | 2,5 | 10 | 60 | 5 | |
| | 100 | 40 | 20 | 60 | 10 | |
| C 14 | 500 | 5 | 5 | 5 | 10 | 8,0 |
| | 250 | 5 | 10 | 10 | 40 | |
| | 100 | 60 | 20 | 20 | 60 | |

## III. Akute Toxizität und Hautverträglichkeit der Sulfonamide der Formel I

Als Testsubstanzen wurden die Produkte A 7 und C 5 aus der Tabelle I eingesetzt.

Jede der getesteten Substanzen hatte bei oraler Verabreichung an Mäuse eine akute Toxizität $LD_{50} > 625$ mg/kg. Bei beiden Testsubstanzen war eine Dosis von 3125 mg/kg für alle Versuchstiere tödlich.

Die Hautverträglichkeit wurde durch einmaligen Auftrag einer kleinen Substanzmenge an haarlosen Mäusen getestet. Der Auftrag von 1%igen und 5%igen Lösungen ergab nach 24 Stunden keinen Befund. 25%ige Testkonzentrationen führten innerhalb von 24 Stunden zu mäßigen Unverträglichkeitsreaktionen der behandelten Hautstellen.

Sowohl bei der Prüfung der akuten oralen Toxizität als auch bei den Hautvertäglichkeitsversuchen wurden pro Testsubstanz und Testkonzentration jeweils drei Versuchstiere eingesetzt.

## IV. Verwendung der Sulfonamide der Formel I als antimikrobielle Substanzen

Nachstehend werden einige Beispiele für die Verwendung der erfindungsgemäßen Sulfonamide als antimikrobielle Mittel angegeben (GT - Gewichtsteile).

/24

1. Desinfizierende Handwaschpaste

52 GT Natriumlaurylsulfat (ca. 35 Gew.-% Waschaktivsubstanz)
3 GT Kokosfettsäuremonoethanolamid
43 GT Bimsstein, fein gemahlen
2 GT Substanz A 4

An Stelle der Substanz A 4 können mit gleich gutem Erfolg die Produkte A 16, B 2 und C 2 eingesetzt werden.

2. Antimikrobielle Seife

Bei der üblichen Herstellung einer Toiletteseife aus einem Gemisch aus 60 Gew.-% Kokosfettsäure-Natriumsalz und 40 Gew.-% Talgfettsäure-Natriumsalz arbeitet man in der Schneckenpresse zusammen mit dem Farbstoff und dem Parfüm solche Mengen der Substanz A 14 ein, daß die fertige Seife 1 Gew.-% davon enthält. Die antimikrobielle Wirkung wird noch gesteigert, wenn man zusätzlich so viel Komplexbildner (Nitrilotriacetat, Ethylendiamintetraacetat oder 1-Hydroxyethandiphosphonat) einarbeitet, daß deren Anteil in der Seife 8 Gew.-% ausmacht.

An Stelle der Substanz A 14 können die Produkte B 5, B 10 und C 5 mit vergleichbarem Erfolg eingesetzt werden.

/ 25

3. Schaumbad

| | | |
|---|---|---|
| 70 | GT | Natriumlaurylethersulfat (27 - 28 Gew.-% Waschaktivsubstanz) |
| 5 | GT | Kokosfettsäurediethanolamid |
| 0,5 | GT | Substanz A 11 |
| 24,5 | GT | Wasser |

An Stelle der Substanz A 11 können auch die Verbindungen A 1, A 19 und B 4 in die Zusammensetzung eingearbeitet werden.

4. Deodorant - Spray

| | | |
|---|---|---|
| 10 | GT | Octyldodecanol |
| 1 | GT | Parfüm |
| 2 | GT | Substanz C 1 |
| 87 | GT | Ethanol |
| 100 | GT | Treibgas |

In dieser Zusammensetzung kann die Substanz C 1 durch die Produkte B 7, B 11 und C 14 ersetzt werden.

"Neue Sulfonamide, ihre Herstellung und Verwendung als antimikrobielle Substanzen"

## Patentansprüche

1. Sulfonamide der Formel I,

$$HO - \underset{|}{\overset{R^1}{CH}} - \underset{|}{\overset{R^2}{CH}} - \left[NH(CH_2)_m\right]_n - \overset{R^3}{N} - SO_2 - R^4 \qquad I$$

in der $R^1$ einen Alkylrest mit 1 bis 18 Kohlenstoffatomen und $R^2$ Wasserstoff oder einen Alkylrest mit 1 bis 17 Kohlenstoffatomen bedeutet, wobei die Summe der in $R^1$ und $R^2$ vorhandenen Kohlenstoffatome 8 bis 18 beträgt, $R^3$ Wasserstoff, einen Alkylrest mit 1 bis 3 Kohlenstoffatomen. einen Hydroxyalkylrest mit 2 oder 3 Kohlenstoffatomen, einen 2-(Dimethylamino)-ethylrest oder einen 3-(Dimethylamino)-propylrest und $R^4$ einen Alkylrest mit 1 bis 3 Kohlenstoffatomen, einen Phenylrest oder einen p-Tolylrest darstellen, während m eine ganze Zahl von 2 bis 6 ist und n die Werte 0 und 1 darstellen kann.

2. Verfahren zur Herstellung der Sulfonamide der Formel I nach Anspruch 1, dadurch gekennzeichnet, daß man Aminoalkanole der Formel II,

$$HO - \overset{R^1}{CH} - \overset{R^2}{CH} - \left[NH(CH_2)_m\right]_n - \overset{R^3}{N} - H \qquad II$$

in der $R^1$, $R^2$, $R^3$, m und n die für die Formel I angegebene Bedeutung haben, mit einem Sulfonsäurechlorid der Formel III,

$$R^4 - SO_2Cl \qquad III$$

in der $R^4$ die für die Formel I angegebene Bedeutung hat, im Molverhältnis 1 : 1 bis 1 : 1,3 umsetzt und die bei der Reaktion entstehende Salzsäure mit einer Base neutralisiert.

3. Verwendung der Sulfonamide der Formel I nach Anspruch 1 als antimikrobielle Substanzen.

Europäisches Patentamt

# EUROPÄISCHER RECHERCHENBERICHT

Nummer der Anmeldung
EP 80107277.8

| EINSCHLÄGIGE DOKUMENTE | | | KLASSIFIKATION DER ANMELDUNG (Int Cl.3) |
|---|---|---|---|
| Kategorie | Kennzeichnung des Dokuments mit Angabe, soweit erforderlich, der maßgeblichen Teile | betrifft Anspruch | |
| | DE - B2 - 2 415 330 (BAYER)<br>+ Beispiele +<br>-- | 1,2 | C 07 C 143/72<br>C 07 C 143/822<br>A 01 N 41/06 |
| | FR - M - 875 M (ORSYMONDE)<br>+ Gesamt +<br>-- | 1,2 | |
| | FR - A - 1 605 475 (ORSYMONDE)<br>+ Seiten 1,2 +<br>-- | 1,2 | |
| | DE - A1 - 2 530 243 (HENKEL)<br>+ Seiten 1,2 +<br>-- | 1,3 | RECHERCHIERTE SACHGEBIETE (Int. Cl.3)<br>C 07 C 143/00<br>A 01 N |
| | DE - B - 1 251 895 (FARBENFABRIKEN BAYER)<br>+ Spalte 1, Zeilen 1-33 +<br>---- | 1,3 | |

KATEGORIE DER GENANNTEN DOKUMENTE
- X: von besonderer Bedeutung
- A: technologischer Hintergrund
- O: nichtschriftliche Offenbarung
- P: Zwischenliteratur
- T: der Erfindung zugrunde liegende Theorien oder Grundsätze
- E: kollidierende Anmeldung
- D: in der Anmeldung angeführtes Dokument
- L: aus andern Gründen angeführtes Dokument
- &: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 26-02-1981 | KÖRBER |